# EUROPÄISCHE PATENTANMELDUNG

(11) **EP 3 232 225 A1**
(43) Veröffentlichungstag der Anmeldung: **18.10.2017**
(21) Anmeldenummer: 16164597.3
(22) Anmeldetag: 11.04.2016
(51) Int. Cl.: G01S 17/74, G01S 7/499

(54) **SENSORANORDNUNG**

(71) Anmelder: Leuze electronic GmbH + Co KG, 73277 Owen/Teck (DE)
(72) Erfinder: Aldiek, Norbert, 73230 Kirchheim/Teck (DE); Feller, Bernhard, 86316 Friedberg (DE); Heckmayr, Alexander, 86807 Buchloe (DE); Kirchner, Markus, 72636 Frickenhausen (DE); Tassy Dr., Sven, 73230 Kirchheim/Teck (DE); Tippmann, Martin, 73235 Weilheim/Teck (DE); Wolf, Tilo, 73240 Wendlingen (DE)
(74) Vertreter: Ruckh, Rainer Gerhard

(57) **Zusammenfassung**

Die Erfindung betrifft eine Sensoranordnung (1) mit einem Sensor (2), welcher wenigstens eine elektromagnetische Wellen (3) emittierende Sendeeinheit (4), eine elektromagnetische Wellen (3) empfangende Empfangseinheit (5) und eine Auswerteeinheit (6), in welcher in Abhängigkeit von Empfangssignalen der Empfangseinheit (5) Objektdistanzen und/oder Objektgeschwindigkeiten bestimmt werden, aufweist. Die Sensoranordnung (1) weist wenigstens eine Reflektoreinheit (9) auf, wobei von der Sendeeinheit (4) emittierte elektromagnetische Wellen (3) auf die Reflektoreinheit (9) geführt sind, wobei die Reflektoreinheit (9) wenigstens eine Eigenschaft der elektromagnetischen Wellen (3) ändert und die so geänderten elektromagnetischen Wellen (3) von der Reflektoreinheit (9) zurück zur Empfangseinheit (5) geführt sind.

## Beschreibung

Die Erfindung betrifft eine Sensoranordnung gemäß dem Oberbegriff des Anspruchs 1.

Derartige Sensoranordnungen können insbesondere optische Sensoren aufweisen, welche Distanzsensoren ausbilden. Ein derartiger optischer Sensor weist typischerweise einen Lichtstrahlen emittierenden Sender als Sendeeinheit und einen Lichtstrahlen empfangenden Empfänger als Empfangseinheit auf Die mit dem optischen Sensor durchgeführte Distanzmessung erfolgt beispielsweise nach dem Pulslaufzeitprinzip. Der Sender emittiert hierbei Lichtstrahlen in Form von Lichtimpulsen. Zur Bestimmung einer Objektdistanz werden die Laufzeiten der Lichtimpulse vom Sender zum Objekt und zurück zum Empfänger ausgewertet.

Die mit einem solchen optischen Sensor durchgeführte Distanzmessung kann insbesondere gegen ein Objekt in Form eines Reflektors erfolgen. Der Reflektor kann einen Überwachungsbereich begrenzen, innerhalb dessen eine Objektdetektion erfolgen soll. Ein solcher optischer Sensor ist aus der DE 41 19 797 A1 bekannt. Weiterhin kann ein solcher Reflektor an einem zu erfassenden Gegenstand wie einem Fahrzeug angeordnet sein. Nachteilig bei derartigen Sensoranordnungen ist, dass die mit den Sensoren durchgeführten Distanzmessungen nicht sicher sind, da der dem Sensor zugeordnete Reflektor nicht eindeutig von anderen Objekten, insbesondere Störobjekten, unterschieden werden kann.

Der Erfindung liegt die Aufgabe zugrunde, eine Sensoranordnung der eingangs genannten Art bereitzustellen, mittels der eine sichere Objektvermessung ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem Sensor, welcher eine elektromagnetische Wellen emittierende Sendeeinheit, eine elektromagnetische Wellen empfangende Empfangseinheit und eine Auswerteeinheit, in welcher in Abhängigkeit von Empfangssignalen der Empfangseinheit Objektdistanzen und/oder Objektgeschwindigkeiten bestimmt werden, aufweist. Die Sensoranordnung weist eine Reflektoreinheit auf, wobei von der Sendeeinheit emittierte elektromagnetische Wellen auf die Reflektoreinheit geführt sind, wobei die Reflektoreinheit wenigstens eine Eigenschaft der elektromagnetischen Wellen ändert und die so geänderten elektromagnetischen Wellen von der Reflektoreinheit zurück zur Empfangseinheit geführt sind.

Die Sensoranordnung weist als erste Komponente einen Sensor auf, mit dem Distanzen und/oder Geschwindigkeiten von Objekten bestimmt werden können. Vorteilhaft bildet der Sensor einen Distanzsensor, bei welchem aus der gemessenen Distanz eines Objekts weitere kinematische Größen wie die Geschwindigkeit und auch die Beschleunigung des detektierten Objekts abgeleitet werden. Vorteilhaft erfolgt mit dem Distanzsensor eine Entfernungsmessung nach dem Pulslaufzeitprinzip oder nach dem Phasenmessprinzip.

Zur Durchführung der Objektdetektion emittiert die Sendeeinheit des Senders generell elektromagnetische Wellen, die von dem zu detektierenden Objekt zurück zur Empfangseinheit geführt werden, wobei die dadurch generierten Empfangssignale der Empfangseinheit in der Auswerteeinheit des Sensors zur Bestimmung der Distanz, der Geschwindigkeit und/oder der Beschleunigung des Objekts ausgewertet werden.

Der Grundgedanke der Erfindung besteht darin, die mit dem Sensor durchgeführten Messungen gegen ein definiertes Ziel in Form einer Reflektoreinheit durchzuführen. Wesentlich hierbei ist, dass die Reflektoreinheit wenigstens eine Eigenschaft der von der Sendeeinheit emittierten elektromagnetischen Wellen ändert und dann die so geänderten elektromagnetischen Wellen zurück zur Empfangseinheit führt, wobei die Empfangseinheit so ausgebildet ist, dass diese die geänderten elektromagnetischen Wellen empfangen und registrieren kann, so dass anhand der dadurch in der Empfangseinheit generierten Empfangssignale die Distanz- und/oder Geschwindigkeitsbestimmung erfolgen kann.

Damit unterscheiden sich die von der Reflektoreinheit zurückreflektierten elektromagnetischen Wellen in charakteristischer Weise von elektromagnetischen Wellen, die von anderen Objekten, insbesondere Störobjekten, zur Empfangseinheit geführt sind, da diese anderen Objekte die elektromagnetischen Wellen nicht wie die Reflektoreinheit ändern. Damit aber kann durch die Registrierung der von der Reflektoreinheit zurückreflektierten elektromagnetischen Wellen diese Reflektoreinheit von allen anderen Objekten sicher unterschieden werden. Damit wird mit geringem Aufwand eine sichere Messung mit dem Sensor gewährleistet.

Um eine möglichst sichere und vorzugsweise quantitative Unterscheidung der Reflektoreinheit von anderen Objekten zu erhalten, kann die Empfangseinheit derart zweikanalig ausgebildet sein, dass der erste und zweite Empfangskanal jeweils bei einer Detektion der Reflektoreinheit einerseits und bei einer Detektion eines Objekts andererseits charakteristisch unterschiedliche Empfangssignale generieren. Dann kann durch einen Vergleich der Empfangssignale beider Empfangskanäle sicher ein Objekt von der Reflektoreinheit unterschieden werden. Alternativ hierzu kann bei einer einkanaligen Empfangsstruktur eine zweikanalige Sendeeinheit, die zwei unterschiedliche Arten von elektromagnetischen Wellen emittiert, vorgesehen sein.

Die in der Reflektoreinheit erfolgende Änderung der elektromagnetischen Wellen kann derart erfolgen, dass in der Empfangseinheit selektiv nur noch diese geänderten elektromagnetischen Wellen registriert werden. Die von anderen Objekten zurückreflektierten, nicht geänderten elektromagnetischen Wellen werden dagegen vollständig ausgefiltert. In diesem Fall werden in der Auswerteeinheit selektiv nur noch die von der Reflektoreinheit zurückreflektierten geänderten elektromagnetischen Wellen ausgewertet.

Alternativ werden von der Empfangseinheit zwar sowohl die von der Reflektoreinheit zurückreflektierten, geänderten elektromagnetischen Wellen als auch die von anderen Objekten, nicht geänderten elektromagnetischen Wellen in der Empfangseinheit registriert. In diesem Fall können in der Auswerteeinheit die nicht geänderten elektromagnetischen Wellen eindeutig unterschieden werden, so dass dadurch eine Unterscheidung der Reflektoreinheit von anderen Objekten möglich wird.

Der Sensor der erfindungsgemäßen Sensoranordnung kann elektromagnetische Wellen beispielsweise im Radio- oder Mikrowellenbereich emittieren.

Vorteilhaft emittiert die Sendeeinheit elektromagnetische Wellen in Form von Lichtstrahlen.

In diesem Fall bildet der Sensor einen optischen Sensor.

Gemäß einer vorteilhaften Ausgestaltung der Erfindung weist die Reflektoreinheit einen Transponder auf.

In diesem Fall bildet die Reflektoreinheit eine aktive Einheit, die abhängig von den von der Sendeeinheit emittierten elektromagnetischen Wellen intern im Transponder geänderte elektromagnetische Wellen generiert und an die Empfangseinheit zurücksendet.

Vorteilhaft werden in dem Transponder eine den elektromagnetischen Wellen aufgeprägte Modulation oder in diesen enthaltene Daten geändert.

Alternativ enthält die Reflektoreinheit einen Frequenzmischer, mittels dessen die Frequenz der elektromagnetischen Welle geändert wird.

Ebenso enthält die Reflektoreinheit einen Verstärker, mit der die Amplitude der elektromagnetischen Wellen geändert wird.

Auch in diesen Fällen bildet die Reflektoreinheit ein aktives Element, das abhängig von den auftreffenden elektromagnetischen Wellen der Sendeeinheit geänderte elektromagnetische Wellen generiert und an die Empfangseinheit zurücksendet.

Für den Fall, dass der Sensor der Sensoranordnung als optischer Sensor ausgebildet ist, kann die Reflektoreinheit einen Reflektor mit einem fluoreszierenden oder phosphoreszierenden Element aufweisen, welches die Wellenlänge von auftreffenden Lichtstrahlen ändert.

Der Reflektor der Reflektoreinheit bildet, im Gegensatz zu einem Transponder, ein passives Element, an welchen die auftreffenden Lichtstrahlen nur umgelenkt werden.

Vorteilhaft kann in diesem Fall die Empfangseinheit einem optischen Filter zugeordnet sein, mittels dessen nur die von der Reflektoreinheit stammenden Lichtstrahlen mit der geänderten Wellenlänge empfangen werden, nicht jedoch die von anderen Objekten zurückreflektierten Lichtstrahlen, deren Wellenlänge nicht geändert ist.

Für den Fall, dass der Sensor als optischer Sensor ausgebildet ist, kann weiterhin die Reflektoreinheit einen Reflektor mit einem polarisierenden Element aufweisen, welches die Polarisation von auftreffenden Lichtstrahlen ändert.

Auch in diesem Fall weist die Reflektoreinheit mit dem Reflektor ein passives Element auf. Durch der Empfangseinheit zugeordnete Polarisationsfilter können von anderen Objekten zurückreflektierte Lichtstrahlen ausgefiltert werden, so dass nur die von der Reflektoreinheit zurückreflektierten Lichtstrahlen zur Empfangseinheit gelangen.

Gemäß einer vorteilhaften Weiterbildung weist die Sensoranordnung eine umschaltbare Sendeeinheit auf, wobei durch Umschaltungen die Sendeeinheit unterschiedliche elektromagnetische Wellen emittiert.

Damit wird die Funktionalität der Sensoranordnung erweitert, da durch die umschaltbare Sendeeinheit Reflektoreinheiten mit unterschiedlichen Eigenschaften erkannt werden können.

Beispielsweise kann bei einer Sensoranordnung mit einem optischen Sensor ein Sender vorgesehen sein, der Umschaltmittel aufweist, mittels derer der Sender Lichtstrahlen mit unterschiedlichen Polarisationen emittiert.

Gemäß einer vorteilhaften Weiterbildung bilden die Sendeeinheiten optische Sender, wobei den Sendern jeweils ein Empfänger zugeordnet ist, wodurch ein Lichtvorhang gebildet ist.

Alternativ weist die Sensoranordnung eine Sendeeinheit auf, deren elektromagnetische Wellen über eine Ablenkeinheit periodisch sind.

Damit können mit der Sensoranordnung ausgedehnte Bereiche erfasst werden. Besonders vorteilhaft weist die Sensoranordnung mehrere Sendeeinheiten auf, wobei diese unterschiedliche elektromagnetische Wellen ausstrahlen und/oder elektromagnetische Wellen in unterschiedlichen Richtungen ausstrahlen.

Derartige Sensoren eignen sich besonders für eine Überwachung räumlich ausgedehnter Bereiche.

Vorteilhaft weist in diesem Fall die Sensoranordnung mehrere, räumliche getrennte Reflektoreinheiten auf.

Insbesondere sind bei einem als optischen Sensor ausgebildeten Sensor die Reflektoreinheiten von Reflektoren mit unterschiedlichen, vorgeordneten polarisierenden Elementen gebildet.

Die Sendeeinheiten des Sensors werden dann als Sender ausgebildet, die Lichtstrahlen mit unterschiedlichen Polarisationseigenschaften aufweisen.

Für den Fall, dass mit dem Sensor der Sensoranordnung ein räumlich ausgedehnter Bereich überwacht wird, können durch die Reflekoreinheiten unterschiedliche Schutzzonen gebildet sein.

Vorteilhaft sind in diesem Fall eine oder mehrere Schutzzonen auswählbar, innerhalb derer eine Objektdetektion erfolgt.

Beispielsweise erfolgt die Auswahl von Schutzzonen in Abhängigkeit von mit dem Sensor erfassten Codes.

Zweckmäßig werden in einem Einlernvorgang Schutzzonen in den Sensor eingelernt.

Für eine Überwachung eines räumlich ausgebildeten Bereichs ist es zweckmäßig, dass bei einem als optischen Sensor ausgebildeten Sensor die Empfangseinheit von einem ortsauflösenden Detektor gebildet ist.

Gemäß einer ersten Variante ist der ortsauflösende Detektor eine Kamera.

Da in diesem Fall nicht unmittelbar mit dem Detektor Distanzen gemessen werden, können Distanzinformationen durch die Detektion spezifischer, räumlich verteilter Reflektoreinheiten, die ihrerseits Ortsinformationen beinhalten, gewonnen werden.

Gemäß einer zweiten Variante ist der ortsauflösende Detektor eine Entfernungsbildkamera.

Die Distanzmessung kann dann für alle lichtempfindlichen Elemente der Kamera beispielsweise nach einem Pulslaufzeitverfahren oder Laufzeitverfahren erfolgen.

Gemäß einer besonders vorteilhaften Ausgestaltung der Erfindung weist der Sensor als Mittel zur Funktionsprüfung eine Testsendeeinheit auf.

Mittels der Testsendeeinheit kann die Funktionsfähigkeit des Sensors, insbesondere der Empfangseinheit und der Auswerteeinheit, überprüft werden. Daher bildet die Testsendeeinheit ein Mittel, mittels dem ein fehlersicherer Betrieb des Sensors gewährleistet ist, so dass die Sensoranordnung auch für sicherheitsrelevante Applikationen eingesetzt werden kann.

Vorteilhaft werden mit der Testsendeeinheit direkt elektromagnetische Wellen als Teststrahlung in die Empfangseinheit eingestrahlt. Die dadurch generierten Empfangssignale werden für eine Funktionsprüfung in der Auswerteeinheit ausgewertet.

In jedem Fall erfolgt die Testung mit der Testsendeeinheit unabhängig vom Betrieb der Objekterkennung.

Dies kann besonders vorteilhaft dadurch erreicht werden, dass die Testsendeeinheit nur in Sendepausen der Sendeeinheit aktiviert ist.

Damit sind die Phasen, innerhalb derer eine Objektdetektion erfolgt, von den Phasen, innerhalb derer eine Funktionsprüfung des Sensors erfolgt, zeitlich getrennt und werden dadurch unabhängig voneinander durchgeführt.

Eine unabhängige Durchführung von Objekterfassung und Funktionsprüfung kann in der Auswerteeinheit auch gleichzeitig durchgeführt werden. In diesem Fall unterscheidet sich die emittierte Teststrahlung eindeutig von den von der Sendeeinheit emittierten beziehungsweise von der Reflektoreinheit zurückreflektierten elektromagnetischen Wellen, beispielsweise hinsichtlich deren Frequenzen.

Gemäß einer vorteilhaften Ausgestaltung weist bei einem als optischem ausgebildeten Sensor die Empfangseinheit einen oder mehrere Empfänger mit vorgeordneten polarisierenden Elementen auf. Die Teilsendeeinheit emittiert zur Testung der Empfänger und der polarisierenden Elemente unterschiedliche polarisierte Lichtstrahlen.

Beispielsweise kann die Testsendeeinheit mehrere Lichtquellen aufweisen, die unterschiedlich polarisiertes Licht emittieren. Je nach Polarisationsrichtung des Lichts werden in dem oder in den Empfängern bestimmte Empfangssignale im fehlerfreien Fall erwartet. Durch Erfassen von Abweichungen gegenüber den erwarteten Empfangssignalen können Fehler in den Empfängern, aber auch in den vorgeordneten polarisierenden Elementen, beispielsweise bedingt durch Alterungen, exakt erfasst und aufgedeckt werden.

Die Erfindung wird im Folgenden Fall anhand der Zeichnungen erläutert. Es zeigen:
- Figur 1:: Erstes Ausführungsbeispiel der erfindungsgemäßen Sensoranordnung.
- Figur 2:: Zweites Ausführungsbeispiel der erfindungsgemäßen Sensoranordnung.
- Figur 3:: Drittes Ausführungsbeispiel einer Sensoranordnung.
- Figur 4:: Einzeldarstellung der Anordnung von Reflekoreinheiten für die Sensoranordnung gemäß Figur 3.
- Figur 5:: Variante einer Anordnung von Reflektoreinheiten für die Sensoranordnung gemäß Figur 3.
- Figur 6:: Viertes Ausführungsbeispiel einer Sensoranordnung
a) mit einer ersten Anordnung von Reflektoreinheiten
b) mit einer zweiten Anordnung von Reflektoreinheiten
- Figur 7:: Fünftes Ausführungsbeispiel einer Sensoranordnung
a) mit einer ersten Anordnung von Reflektoreinheiten
b) mit einer zweiten Anordnung von Reflektoreinheiten
- Figur 8:: a) Weitere Anordnung von Reflektoreinheiten für eine Sensoranordnung
b) Kamerabild für einen aktivierten ersten Sender der Sensoranordnung
c) Kamerabild für einen aktivierten zweiten Sender der Sensoranordnung
- Figur 9a, b:: Weitere Anordnungen von Reflektoreinheiten für eine Sensoranordnung.
- Figur 10:: Sechstes Ausführungsbeispiel einer Sensoranordnung.
- Figur 11:: Siebtes Ausführungsbeispiel einer Sensoranordnung.

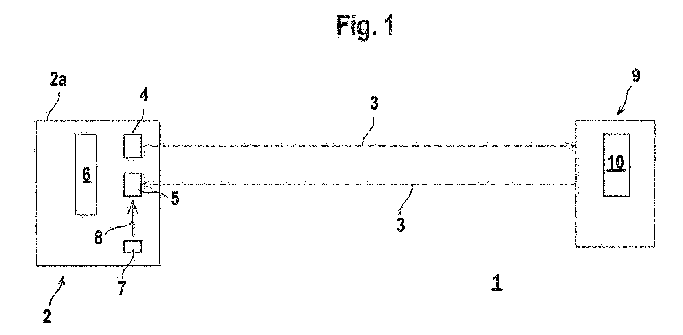

Figur 1 zeigt ein erstes Ausführungsbeispiel der erfindungsgemäßen Sensoranordnung 1. Die Sensoranordnung 1 umfasst einen Sensor 2 mit in einem Gehäuse 2a angeordneten Sensorkomponenten. Der Sensor 2 weist eine elektromagnetische Wellen 3 emittierende Sendeeinheit 4 und eine elektromagnetische Wellen 3 empfangende Empfangseinheit 5 auf. Im vorliegenden Fall emittiert die Sendeeinheit 4 elektromagnetische Wellen 3 im Radio- oder Mikrowellenbereich. Die Sendeeinheit 4 weist ein dementsprechend ausgebildetes Sendeelement zur Emission der Radio- und Mikrowellenstrahlung auf. Die Empfangseinheit 5 weist ein für diese Strahlung empfindliches Empfangselement auf. Der Sensor 2 umfasst weiterhin eine Auswerteeinheit 6, die von einem Mikroprozessor oder dergleichen gebildet ist.

Die Auswerteeinheit 6 dient zur Steuerung der Sendeeinheit 4. Weiterhin dient die Auswerteeinheit 6 zur Auswertung von in der Empfangseinheit 5 generierten Empfangssignalen. In Abhängigkeit dieser Empfangssignale generiert die Auswerteeinheit 6 Ausgangssignale die über einen nicht dargestellten Ausgang oder eine geeignete Schnittstelle ausgegeben werden.

Der Sensor 2 bildet einen Distanzsensor. Im vorliegenden Fall erfolgt die Distanzmessung nach einem Puls-Laufzeit-Verfahren. Dabei emittiert die Sendeeinheit 4 elektromagnetische Wellen 3 in Form von Pulsfolgen, wobei zur Distanzbestimmung jeweils die Laufzeit eines Pulses von der Sendeeinheit 4 zu einem Objekt und von diesem zurück zur Empfangseinheit 5 ausgewertet wird. Alternativ kann die Distanzmessung nach dem frequency modulated continuous wave-Prinzip (fmcw) Phasenmessprinzip erfolgen. In diesem Fall ist den in der Sendeeinheit 4 emittierten elektromagnetischen Wellen 3 eine zeitlich veränderte Modulationsfrequenz aufgeprägt.

Zur Objektdetektion werden die von der Sendeeinheit 4 emittierten elektromagnetischen Wellen 3 aus dem Gehäuse 2a des Sensors 2 in einen Überwachungsbereich geführt, wobei von einem dort angeordneten Objekt die elektromagnetischen Wellen 3 zurück zur Empfangseinheit 5 geführt sind.

Für eine Funktionsprüfung des Sensors 2 ist weiterhin eine Testsendeeinheit 7 vorgesehen, die Teststrahlung 8 in Form von elektromagnetischen Wellen 3 emittiert. Die von der Testsendeeinheit 7 emittierte Teststrahlung 8 wird direkt in die Empfangseinheit 5 eingestrahlt, das heißt sie wird nicht aus dem Gehäuse 2a geführt.

Die von der Testsendeeinheit 7 emittierte Teststrahlung 8 wird in der Empfangseinheit 5 empfangen und in der Auswerteeinheit 6 ausgewertet. Vorteilhaft ist in der Auswerteeinheit 6 eine bestimmte Erwartungshaltung für die empfangene Teststrahlung 8 hinterlegt, welche im fehlerfreien Fall auch bei dem Empfang der Teststrahlung 8 erhalten wird. Eine Fehleraufdeckung von Sensorkomponenten erfolgt durch eine Analyse der Abweichungen der Testmessungen von der Erwartungshaltung.

Die Funktionsüberprüfung erfolgt unabhängig von der Objektdetektion, indem die Testsendeeinheit 7 die Teststrahlung 8 nur in den Sendepausen der Sendeeinheit 4 emittiert.

Erfindungsgemäß weist die Sensoranordnung 1 eine dem Sensor 2 zugeordnete Reflektoreinheit 9 auf. Die Reflektoreinheit 9 weist im vorliegenden Fall einen Transponder 10 auf.

Durch die so gebildete Reflektoreinheit 9 werden die von der Sendeeinheit 4 emittierten elektromagnetischen Wellen 3 in charakteristischer Weise geändert. Im vorliegenden Fall wird den elektromagnetischen Wellen 3, die von der Sendeeinheit 4 emittiert werden, Dateninhalte aufgeprägt. In dem Transponder 10 werden diese Dateninhalte empfangen und geändert. Dann werden vom Transponder 10 elektromagnetische Wellen 3 mit den geänderten Dateninhalten an die Empfangseinheit 5 zurückgesendet.

Anhand der in der Empfangseinheit 5 empfangenen elektromagnetischen Wellen 3 mit den geänderten Dateninhalten kann die Reflektoreinheit 9 in der Auswerteeinheit 6 erkannt und von allen anderen Objekten, insbesondere Störobjekten, eindeutig unterschieden werden, da diese die elektromagnetische Wellen 3 der Sendeeinheit 4 ohne Veränderungen der Dateninhalte zurücksenden.

Damit kann in der Auswerteeinheit 6 selektiv die Distanz der Reflektoreinheit 9 zum Sensor 2 bestimmt werden, wobei durch die Änderung der elektromagnetischen Wellen 3 in der Reflektoreinheit 9 eine sichere Distanzmessung derart gewährleistet ist, dass diese nicht durch Störobjekte beeinflusst ist.

Weiterhin können aus der ermittelten Distanz der Reflektoreinheit 9 in der Auswerteeinheit 6 auch kinematische Größen wie die Geschwindigkeit oder die Beschleunigung der Reflektoreinheit 9 abgeleitet werden. Alternativ kann beispielsweise durch den Dopplereffekt auch eine direkte Geschwindigkeitsmessung durchgeführt werden. Die so bestimmten Größen können als Ausgangsgrößen über den Ausgang des Sensors 2 ausgegeben werden.

Eine vorteilhafte Applikation der Sensoranordnung 1 besteht darin, dass von einer stationären Einheit aus die Position und Geschwindigkeit einer beweglichen Einheit wie zum Beispiel einem Fahrzeug oder einem beweglichen Anlagenteil, überwacht werden soll. Dann befindet sich der Sensor 2 vorteilhaft an der stationären Einheit und die Reflektoreinheit 9 an der beweglichen Einheit.

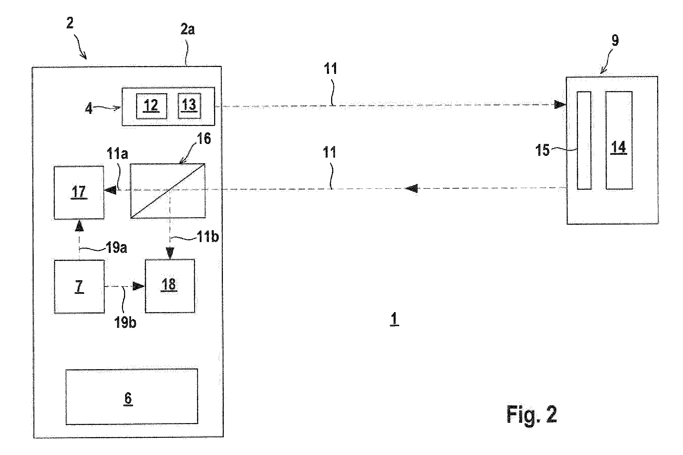

Figur 2 zeigt ein zweites Ausführungsbeispiel der erfindungsgemäßen Sensoranordnung 1. In diesem Fall weist die Sensoranordnung 1 einen Sensor 2 in Form eines optischen Sensors auf. Entsprechend der Ausführungsform gemäß Figur 1 bildet der Sensor 2 einen nach dem Laufzeitprinzip arbeitenden Distanzsensor, dessen Sensorkomponenten in einem Gehäuse 2a integriert sind.

Der optische Sensor weist eine Sendeeinheit 4 auf, die von einem Lichtstrahlen 11 emittierenden Sender 12, beispielsweise einer Leuchtdiode, gebildet ist. Als weiterer Bestandteil der Sendeeinheit 4 ist ein dem Sender 12 nachgeordneter Polarisator 13 vorgesehen.

Alternativ kann der Sender 12 auch von einer Laserdiode gebildet sein, die polarisiertes Licht emittiert.

Damit emittiert die Sendeeinheit 4 Lichtstrahlen 11 mit einer bestimmten Polarisationsrichtung.

Weiterhin könnte auch ein Sender 12 vorgesehen sein, der unpolarisiertes Licht emittiert.

Die Lichtstrahlen 11 der Sendeeinheit 4 sind, wie Figur 2 zeigt, auf eine Reflektoreinheit 9 geführt, die einen Reflektor 14, insbesondere Retroreflektor, mit einem vorgeordneten weiteren Polarisator 15 umfasst.

Die Polarisationseigenschaften der Lichtstrahlen 11 werden somit bei der Reflexion an der Reflektoreinheit 9 in charakteristischer Weise geändert.

Die von der Reflektoreinheit 9 zurückreflektierten Lichtstrahlen 11 werden auf eine Trenneinrichtung 16 geführt, die von einem polarisierenden Strahlteiler oder dergleichen gebildet ist. Hinter der Trenneinrichtung 16 sind zwei Empfänger 17, 18 angeordnet, welche zum Empfang von Lichtstrahlen 11 ausgebildet sind. Die Empfänger 17, 18 bilden die Empfangseinheit 5 des optischen Sensors.

Werden die von der Sendeeinheit 4 emittierten Lichtstrahlen 11 nicht auf die Reflektoreinheit 9, sondern auf ein anderes Objekt geführt, bleibt die Polarisationsrichtung der Lichtstrahlen 11 zumindest im Wesentlichen erhalten. Diese zurückreflektierten Lichtstrahlen 11 durchsetzen die Trenneinrichtung 16 und werden als Lichtstrahlen 11a auf den ersten Empfänger 17 geführt. Werden jedoch die Lichtstrahlen 11a der Sendeeinheit 4 auf die Reflektoreinheit 9 geführt, so wird bei Reflexion der Lichtstrahlen 11a an der Reflekoreinheit 9 deren Polarisation so geändert, dass Lichtstrahlen 11b von der Trenneinrichtung 16 zumindest überwiegend auf den zweiten Empfänger 18 geführt sind. Allgemein wird die Trenneinheit so ausgebildet, dass das Licht, das über die Reflektoreinheit 9 durch den Polarisator 13 gelangt ist, überwiegend in einen Zweig gelangt, während das Licht, das den Retroreflektor nicht erreichen konnte und an anderen Objekten reflektiert wurde, zum größeren Teil in den jeweils anderen Zweig gelangt beziehungsweise sich zu gleichen Teilen auf die beiden Zweige verteilt.

In der Auswerteeinheit 6 kann somit durch einen Vergleich der auf die Empfänger 17, 18 auftreffenden Lichtmengen klar unterschieden werden, ob eine Detektion der Reflektoreinheit 9 oder eines anderen Objekts vorliegt.

Entsprechend der Ausführungsform gemäß Figur 1 erfolgt damit auch bei dem optischen Sensor der Figur 2 eine sichere Distanzmessung, bei der die Reflektoreinheit 9 als Ziel sicher von anderen Objekten, insbesondere Störobjekten unterschieden werden kann.

Im optischen Sensor ist weiterhin eine Testsendeeinheit 7 integriert. Mit dieser werden in den Sendepausen der Sendeeinheit 4 Testsendelichtstrahlen 19a, b direkt in die Empfänger 17, 18 eingestrahlt. Die Funktionsprüfung des Sensors 2 mit der Testsendeeinheit 7 erfolgt analog zu der Ausführungsform gemäß Figur 1.

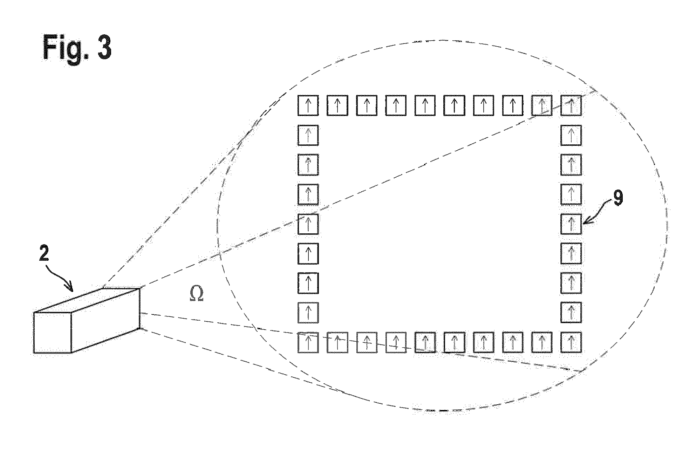

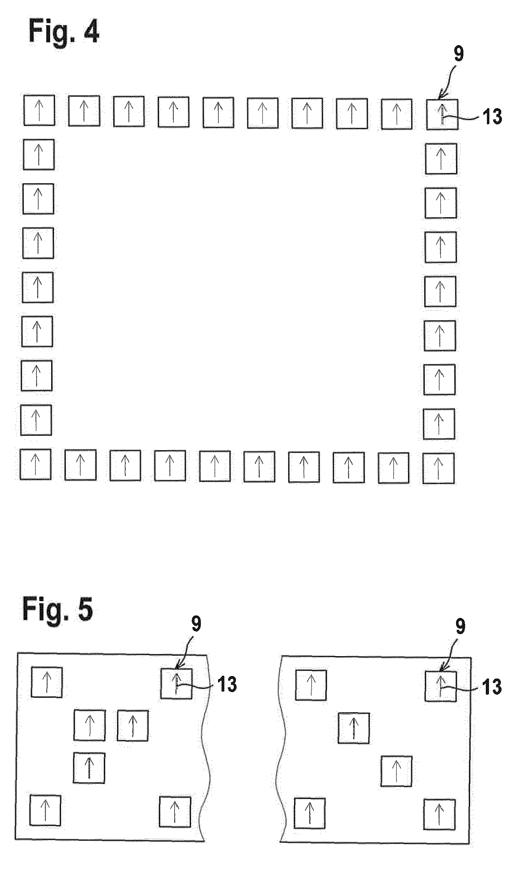

Figur 3 zeigt einen als optischen Sensor ausgebildeten Sensor 2, der als Sendeeinheit 4 mehrere Lichtstrahlen 11, 11a emittierende Sendeelemente aufweist, wobei die Lichtstrahlen 11, 11a in einen Raumwinkelbereich Ω abgestrahlt werden. Die Sendeelemente können alternierend aktiviert werden. Als Empfangseinheit 5 ist ein ortslauflösender Detektor, insbesondere eine Kamera vorgesehen. Die Sensoranordnung 1 umfasst eine Anordnung von Reflektoreinheiten 9, die räumlich verteilt angeordnet sind. Diese Anordnung ist in Figur 4 einzeln dargestellt. Jede Reflektoreinheit 9 besteht aus einem Reflektor 14 mit einem vorgeordneten Polarisator 13, wobei in Figur 4 nur der Polarisator 13 sichtbar ist. Figur 5 zeigt eine Variante einer Anordnung von derartigen polarisierenden Elementen für die Sensoranordnung 1 gemäß Figur 4. In diesem Fall repräsentieren die Reflektoreinheiten 9 Codes. Durch den Sensor 2 und die Anordnung von Reflektoreinheiten 9 wird ein Überwachungsvolumen aufgespannt.

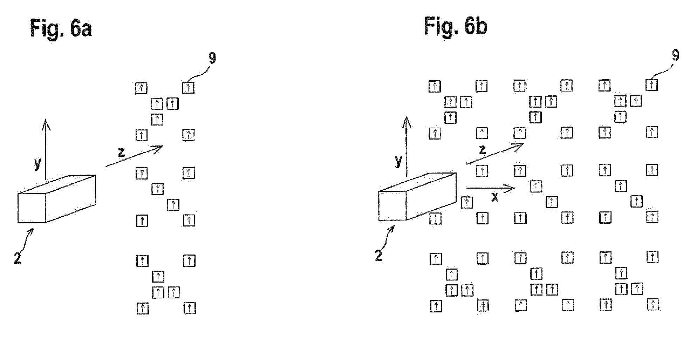

Die Figuren 6a, 6b zeigen einen Sensor 2 in Form eines optischen Sensors mit einer Entfernungsbildkamera. Die Sensoranordnung 1 gemäß Figur 6a beziehungsweise 6b weist eine Anordnung von Reflektoreinheiten 9 bestehend jeweils aus einem Reflektor 14 und einem Polarisator 13 auf, analog zur Ausführung gemäß Figur 4.

Mit der ortsauflösenden Entfernungsbildkamera können die räumlich getrennten Polarisatoren 13 unterschieden werden. Damit ist es möglich die Richtungen, unter denen Objekte in die Strecke zwischen der Anordnung der Reflektoreinheit 9 und Sensor 2 eintreten, zu unterscheiden. Falls die Polarisatoranordnungen in Form Positionscodes band- (Figur 6a) oder flächenförmig (Figur 6b) angeordnet sind und der Sensor 2 mit einem Fahrzeug oder einem mobilen Roboter verbunden ist, kann eine Sensorposition in Richtung senkrecht zur Verbindungslinie zwischen Sensor 2 und Reflektoranordnung bestimmt werden. Wenn die Codes auf einem mobilen Gerät angebracht sind, ist die Kamera in der Lage, Abstand, Position und Orientierung der Codes zu bestimmen und gleichzeitig den Raum zwischen Gerät und Kamera sicher zu überwachen. Sind die Reflektoreinheiten 9 wie in Figur 3 angeordnet, ist es möglich, die von der Anordnung der Reflektoreinheit 9 begrenzte Fläche zu überwachen. Sind mehrere Flächen mit Polarisationsanordnungen vorgesehen, so können diese durch mehrere Schutzzonen überwacht werden, die durch Codes gekennzeichnet werden. Durch Lesen der Codes können die Schutzzonen selektiv aktiviert werden.

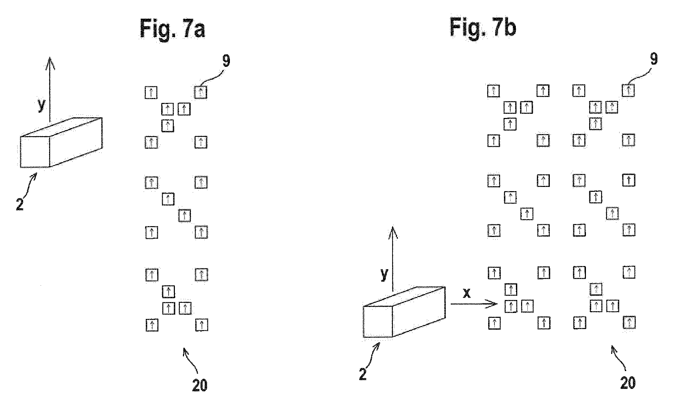

Figur 7a, 7b zeigt einen als optischen Sensor ausgebildeten Sensor 2 für eine Sensoranordnung 1. In diesem Fall weist der Sensor 2 als Empfangseinheit 5 eine Kamera als ortsauflösenden Detektor auf, mit der keine Distanzmessung erfolgt. In diesem Fall werden laterale Distanzinformationen durch Erfassen von geeigneten Reflektoreinheiten 9 gewonnen. Die Figuren 7a, 7b zeigen Testlichtmuster 20, mit denen einerseits der Sensor 2 getestet wird und andererseits der durch diese begrenzte Bereich überwacht wird.

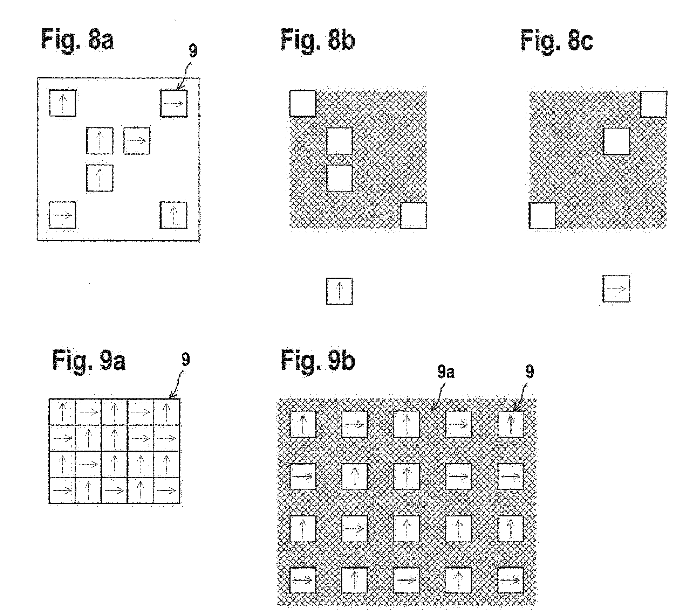

Figur 8a zeigt eine Anordnung von Reflektoreinheiten 9 für eine Sensoranordnung 1 mit einem optischen Sensor, der eine einkanalige Empfangsstruktur, jedoch eine zweikanalige Senderstruktur aufweist. Die Empfangsstruktur ist von einer Kamera gebildet. Wie Figur 8a zeigt, sind bei der Anordnung von Reflektoreinheiten 9 zwei verschiedene Polarisatoren 13a, 13b vor jeweils einem Reflektor vorgesehen.

Durch das Schalten der Polarisationsrichtung des zweikanaligen Senders 12 parallel und senkrecht zur Polarisation der den Reflektoren 14 zugeordneten Polarisatoren 13a, 13b, werden die Reflektorelemente alternierend mit sehr hohem Kontrast hell und dunkel abgebildet, so dass der Test der ortsaufgelösten Detektorstruktur durch das Umschalten des elektronisch polarisationsschaltenden Elements erfolgen kann.

Die Figuren 8a, 8b zeigen die Kamerabilder für die unterschiedlichen Senderaktivierungen. Dies kann alternativ auch durch eine Anordnung erreicht werden, bei der die Polarisationsrichtung des Sendelichts umgeschaltet wird. Ist eine Distanzinformation zwischen den Reflektorelementen und dem Sensor 2 erforderlich, wird die einkanalige ortsaufgelöste Detektorstruktur als Entfernungsbildkamera ausgeführt.

Die Figuren 9a, 9b zeigen weitere mögliche Anordnungen von Reflektoreinheiten 9. Die Reflektorelemente werden entweder flächenfüllend nebeneinander angebracht (Figur 9a) oder der Zwischenraum wird mit diffus reflektierendem Material 9a mit einem geringen Albedo (einer geringen Remission) ausgefüllt (Figur 9b).

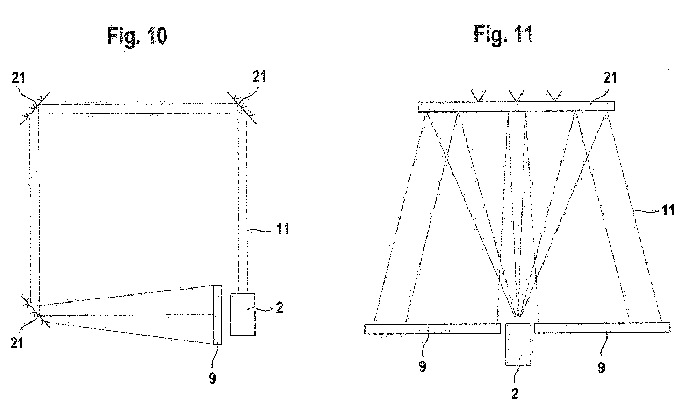

Figur 10 zeigt eine weitere Ausführungsform einer Sensoranordnung 1. Die Sensoranordnung 1 umfasst als Sensor 2 einen optischen Sensor. Der Sender 12 kann von einem einzelnen Sendeelement gebildet sein, der Empfänger 17, 18 besteht vorteilhaft aus einer Kamera. Die vom Sender 12 des Sensors 2 emittierten Lichtstrahlen 11 werden über Umlenkspiegel 21 auf eine Reflektoreinheit 9 eingeführt, die von einem Reflektor 14 mit vorgeordnetem Polarisator 13 gebildet sein kann. Durch diese Strahlführung der Lichtstrahlen 11 wird ein ausgedehnter Überwachungsbereich überwacht. Wesentlich ist, dass die aus metallischen Materialien bestehenden Umlenkspiegel 21 die Polarisationseigenschaften der Lichtstrahlen 11 im Wesentlichen unverändert lassen.

Figur 11 zeigt eine weitere Ausführungsform einer Sensoranordnung 1. Diese Sensoranordnung 1 umfasst einen optischen Sensor und zwei beidseits zu diesem angeordnete Reflektoreinheiten 9 auf einer Seite eines Überwachungsbereichs. Auf der anderen Seite des Überwachungsbereichs befindet sich ein Umlenkspiegel 21. Die Komponenten dieser Sensoranordnung 1 sind entsprechend zur Ausführungsform von Figur 10 ausgeführt. Die vom Sender 12 des Sensors 2 emittierten Lichtstrahlen 11, 11a werden durch Mehrfachreflexionen zwischen Umlenkspiegel 21 und den Reflektoreinheiten 9 zur Kamera geführt. Auch mit dieser Sensoranordnung 1 wird ein ausgedehnter Überwachungsbereich überwacht.

### Bezugszeichenliste

- (1): Sensoranordnung
- (2): Sensor
- (2a): Gehäuse
- (3): elektromagnetische Wellen
- (4): Sendeeinheit
- (5): Empfangseinheit
- (6): Auswerteeinheit
- (7): Testsendeeinheit
- (8): Teststrahlung
- (9): Reflektoreinheit
- (9a): diffus reflektierendes Material
- (10): Transponder
- (11): Lichtstrahlen
- (11a): Lichtstrahlen
- (11b): Lichtstrahlen
- (12): Sender
- (13): Polarisator
- (14): Reflektor
- (15): Polarisator
- (16): Trenneinrichtung
- (17): Empfänger
- (18): Empfänger
- (19a): Testsendelichtstrahlen
- (19b): Testsendelichtstrahlen
- (20): Testlichtmuster
- (21): Umlenkspiegel

## Patentansprüche

1. Sensoranordnung (1) mit einem Sensor (2), welcher wenigstens eine elektromagnetische Wellen (3) emittierende Sendeeinheit (4), eine elektromagnetische Wellen (3) empfangende Empfangseinheit (5) und eine Auswerteeinheit (6), in welcher in Abhängigkeit von Empfangssignalen der Empfangseinheit (5) Objektdistanzen und/oder Objektgeschwindigkeiten bestimmt werden, aufweist, **dadurch gekennzeichnet, dass** die Sensoranordnung (1) wenigstens eine Reflektoreinheit (9) aufweist, wobei von der Sendeeinheit (4) emittierte elektromagnetische Wellen (3) auf die Reflektoreinheit (9) geführt sind, wobei die Reflektoreinheit (9) wenigstens eine Eigenschaft der elektromagnetischen Wellen (3) ändert und die so geänderten elektromagnetischen Wellen (3) von der Reflektoreinheit (9) zurück zur Empfangseinheit (5) geführt sind.

2. Sensoranordnung nach Anspruch 1, **dadurch gekennzeichnet, dass** durch die Änderung der elektromagnetischen Wellen (3) in der Reflektoreinheit (9) in dem Sensor (2) eine Unterscheidung der Reflektoreinheit (9) von anderen Objekten erfolgt.

3. Sensoranordnung nach einem der Ansprüche 1 oder 2, **dadurch gekennzeichnet, dass** die Sendeeinheit (4) elektromagnetische Wellen (3) in Form von Lichtstrahlen (11) emittiert.

4. Sensoranordnung nach einem der Ansprüche 1 bis 3, **dadurch gekennzeichnet, dass** die Reflektoreinheit (9) einen Transponder (10) aufweist.

5. Sensoranordnung nach Anspruch 4, **dadurch gekennzeichnet, dass** in dem Transponder (10) eine den elektromagnetischen Wellen (3) aufgeprägte Modulation oder in diesen enthaltene Daten geändert werden.

6. Sensoranordnung nach einem der Ansprüche 1 bis 3, **dadurch gekennzeichnet, dass** die Reflektoreinheit (9) einen Frequenzmischer enthält, mittels dessen die Frequenz der elektromagnetischen Wellen (3) geändert wird.

7. Sensoranordnung nach einem der Ansprüche 1 bis 3, **dadurch gekennzeichnet, dass** die Reflektoreinheit (9) einen Verstärker enthält, mit dem die Amplitude der elektromagnetischen Welle (3) geändert wird.

8. Sensoranordnung nach Anspruch 3, **dadurch gekennzeichnet, dass** die Reflektoreinheit (9) einen Reflektor (14) mit einem fluoreszierenden oder phosphoreszierenden Element aufweist, welches die Wellenlänge von auftreffenden Lichtstrahlen (11) ändert.

9. Sensoranordnung nach Anspruch 3, **dadurch gekennzeichnet, dass** die Reflektoreinheit (9) einen Reflektor (14) mit einem polarisierenden Element aufweist, welches die Polarisation von auftreffenden Lichtstrahlen (11) ändert.

10. Sensoranordnung nach einem der Ansprüche 1 bis 9, **dadurch gekennzeichnet, dass** diese eine umschaltbare Sendeeinheit (4) aufweist, wobei durch Umschaltungen die Sendeeinheit (4) unterschiedliche elektromagnetische Wellen (3) emittiert.

11. Sensoranordnung nach einem der Ansprüche 1 bis 10, **dadurch gekennzeichnet, dass** diese mehrere Sendeeinheiten (4) aufweist, wobei diese unterschiedliche elektromagnetische Wellen (3) ausstrahlen und/oder elektromagnetische Wellen (3) in unterschiedlichen Richtungen ausstrahlen.

12. Sensoranordnung nach Anspruch 11, **dadurch gekennzeichnet, dass** die Sendeeinheiten (4) optische Sender bilden, wobei den Sendern (12) jeweils ein Empfänger (17) zugeordnet ist, wodurch ein Lichtvorhang gebildet ist.

13. Sensoranordnung nach einem der Ansprüche 1 bis 10, **dadurch gekennzeichnet, dass** diese eine Sendeeinheit (4) aufweist, deren elektromagnetische Wellen (3) über eine Ablenkeinheit periodisch sind.

14. Sensoranordnung nach einem der Ansprüche 1 bis 13, **dadurch gekennzeichnet, dass** diese mehrere, räumliche getrennte Reflektoreinheiten (9) aufweist.

15. Sensoranordnung nach einem der Ansprüche 1 bis 14, **dadurch gekennzeichnet, dass** bei einem als optischer Sensor ausgebildeten Sensor (2) die Reflektoreinheiten (9) von Reflektoren (14) mit unterschiedlichen, vorgeordneten polarisierenden Elementen gebildet sind.

16. Sensoranordnung nach einem der Ansprüche 14 oder 15, **dadurch gekennzeichnet, dass** durch die Reflekoreinheiten unterschiedliche Schutzzonen gebildet sind.

17. Sensoranordnung nach Anspruch 16, **dadurch gekennzeichnet, dass** eine oder mehrere Schutzzonen auswählbar sind, innerhalb derer eine Objektdetektion erfolgt.

18. Sensoranordnung nach Anspruch 17, **dadurch gekennzeichnet, dass** die Auswahl von Schutzzonen in Abhängigkeit von mit dem Sensor (2) erfassten Codes erfolgt.

19. Sensoranordnung nach einem der Ansprüche 16 bis 18, **dadurch gekennzeichnet, dass** in einem Einlernvorgang Schutzzonen in den Sensor (2) eingelernt werden.

20. Sensoranordnung nach einem der Ansprüche 1 bis 19, **dadurch gekennzeichnet, dass** bei einem als optischer Sensor ausgebildeten Sensor (2) die Empfangseinheit (5) von einem ortsauflösenden Detektor gebildet ist.

21. Sensoranordnung nach Anspruch 20, **dadurch gekennzeichnet, dass** der ortsauflösende Detektor eine Kamera ist.

22. Sensoranordnung nach Anspruch 20, **dadurch gekennzeichnet, dass** der ortsauflösende Detektor eine Entfernungsbildkamera ist.

23. Sensoranordnung nach einem der Ansprüche 1 bis 22, **dadurch gekennzeichnet, dass** der Sensor (2) als Mittel zur Funktionsprüfung eine Testsendeeinheit (7) aufweist.

24. Sensoranordnung nach Anspruch 23, **dadurch gekennzeichnet, dass** mit der Testsendeeinheit (7) direkt elektromagnetische Wellen (3) als Teststrahlung (8) in die Empfangseinheit (5) eingestrahlt werden, und dass die dadurch generierten Empfangssignale für eine Funktionsprüfung in der Auswerteeinheit (6) ausgewertet werden.

25. Sensoranordnung nach einem der Ansprüche 23 oder 24, **dadurch gekennzeichnet, dass** die Testsendeeinheit (7) nur in Sendepausen der Sendeeinheit (4) aktiviert ist.

26. Sensoranordnung nach einem der Ansprüche 23 bis 25, **dadurch gekennzeichnet, dass** bei einem als optischer Sensor ausgebildeten Sensor die Empfangseinheit (5) einen oder mehrere Empfänger mit vorgeordneten polarisierenden Elementen aufweist, und dass die Testsendeeinheit (7) zur Testung der Empfänger und der polarisierenden Elemente unterschiedlich polarisierte Lichtstrahlen (11) emittiert.
